# EUROPEAN PATENT SPECIFICATION

(11) **EP 3 249 303 B1**
(45) Date of publication and mention of the grant of the patent: **04.09.2019**
(21) Application number: 16171056.1
(22) Date of filing: 24.05.2016
(51) Int. Cl.: F24C 15/00, A23B 4/052

(54) **SYSTEM FOR CURING AND FLAVOURING FOODSTUFF**
SYSTEM ZUM RÄUCHERN UND ZUR AROMATISIERUNG VON LEBENSMITTELN
SYSTÈME POUR FUMER ET AROMATISER DES ALIMENTS

(43) Date of publication of application: 29.11.2017
(73) Proprietor: Electrolux Appliances Aktiebolag, 105 45 Stockholm (SE)
(72) Inventor: SWAYNE, Steve, Springfield, TN 37172 (US); McGinnis, Brendan, Springfield, TN 37172 (US); AINAPURE, Ashish, Springfield, TN 37172 (US); REUL, Kurt, 91541 Rothenburg o. d. Tauber (DE); LUCKHARDT, Christoph, 91541 Rothenburg ob der Tauber (DE); KAISER, Kersten, 91541 Rothenburg o. d. Tauber (DE)
(74) Representative: Electrolux Group Patents

(56) References cited:
- EP-A2- 2 005 831
- WO-A1-2004/000027
- WO-A1-2013/111005
- DE-A1-102010 063 716
- FR-A1- 2 655 516
- KR-A- 20130 031 610

## Description

The present invention relates to a system for curing or flavouring foodstuff according to the preamble of claim 1 and a method for flavouring or curing foodstuff.

Smoking of food is commonly known. It is used to achieve a special taste of food and/or cure the smoked foodstuff. Usually specially designed smoking ovens are applied. Such professional smoking ovens can generate the smoke outside of the heating chamber, allowing to cold smoke food. However, these solutions leave the chamber in which the foodstuff is stored during the process with smoke flavour residues, which might be undesirable if other food has to be prepared inside this oven.

Moreover, also from BBQ applications it is known to flavour foodstuff with smoke. Thereby, smoke units can be applied, which are fired with wood. Usually a pot with watered wood chips is placed on top or beside the wooden coal. However, such systems provide for an essentially uncontrolled process, impacted by heat of the glowing coal and air stream inside the barbeque equipment. Thereby, overheating of wood chips may occur, or watered chips may become dry too early, and may even catch fire instead of smoking.

The document US 4,374,489 describes a smoker device adaptable, adjustable and removable to or from a grill or oven. However, the arrangement disclosed in this document does not allow for a controlled smoking process. As the smoke is impacted by heat and air stream inside the grill or oven, particularly the presence of smoke, temperature and/or smell cannot be sufficiently controlled. Moreover, the supplied smoke source, e.g. wood chips, can neither be accessed for control, nor be recharged during the smoking process. The smoke is inserted through a large uninsulated hole into the oven cavity. The smoker device is arranged beneath the lower part of the oven cavity, so that the smoke rises into said oven cavity by natural convection without assisting fan. Since the smoker device has to be attached at a bottom wall of the grill or oven, it is not suitable for build-in ovens. In the most current ovens, the attachment of this smoker device requires substantial alterations of the platform of said oven. Moreover, the smoke cannot be easily directed into a container arranged inside the oven cavity.

Infusing food cooked inside a household oven with smoky flavour or even curing said food with smoke in a household oven is also problematic, as the cooking and/or smoking process, particularly the presence of smoke, temperature and/or smell cannot be sufficiently controlled.

In household appliances, such flavouring of foodstuff with smoke can be done with smoking bags, which are lined on the inside with woodchips. The document FI0943713A, for example, describes a smoke bag in which foodstuff to be smoked can be placed. However, such bags have to be heated up to 250°C to create the wood smoke. So, delicate food can be quickly overcooked. Additionally, due to the closed bag the supplied smoke source, e.g. wood chips, can neither be accessed for control, nor be recharged during the smoking process, without releasing the smoke from the smoke bag. Furthermore, a temperature control of the bag interior is not possible.

The document US 4,232,597 describes a portable smoker. However, this document does not disclose the design of a household cooking appliance, which provides a curing or flavouring function. Moreover, the system disclosed in this document is disadvantageous in that it provides a relatively complicate and protruding arrangement, it cannot be operated without the smoker unit, and particularly, the smoking unit is not accessible during the smoking process for recharging and/or controlling the smoke source. Therefore, such arrangement is not applicable to modern cavity designs of household appliances. The smoke is inserted through a large uninsulated hole into the oven cavity. The smoker unit is arranged at a sidewall of the apparatus, so that the smoke rises into a cabinet by natural convection without assisting fan. Since the smoker unit has to be attached at the side wall of the cabinet, it is not suitable for build-in ovens. In the most current ovens, the attachment of this smoker unit requires substantial alterations of the structure of the apparatus. Moreover, the smoke cannot be easily directed into a container arranged inside the cabinet.

WO 2013/111005 A1 discloses a cooking oven combined with an accessory smoking system. The smoking system is arranged above the cooking oven and comprises a smoke generator and a fan. The smoke generated by the smoke generator is blown downwards through a duct into an oven cavity of the cooking oven.

EP 2 005 831 A2 discloses a cooking and smoking apparatus comprising an oven cavity with heating elements and a smoke generator. The smoke generator is connected to the oven cavity via conduit means and provides smoke for food stuff arranged inside the oven cavity. The smoke is directly delivered into the oven cavity.

WO 2004/000027 A1 discloses a food processing apparatus with electrical heating means and smoke curing capability, so that food products can be smoke-cured and cooked simultaneously. A smoke generator is arranged directly besides an oven cavity, in which the food is arranged. The smoke is inserted directly into the oven cavity.

KR 10 2013 031610 A discloses a smoked cooking utensil comprising an oven cavity equipped with heating elements and an air circulation fan. A smoking equipment and an isolation room are arranged beneath the oven cavity. The smoking equipment generates smoke in the isolation room. The smoke is delivered from the isolation room to the oven cavity via a pipe by the air circulation fan. A further pie provides a recirculation from the oven cavity to the isolation room.

DE 10 2010 063716 A1 discloses a steam curing container for an oven cavity of a cooking oven. An inlet of the steam curing container is connectable to a steam generator of the cooking oven via a pipe. An outlet of the steam curing container is connectable to an exhaust channel via a hose. The outlet of the steam curing container includes a pressure control valve.

It is an object of the present invention to overcome the above drawbacks and problems.

It is a further object of the present invention to provide a system, particularly a system comprising a household cooking appliance such as an oven, for flavouring and curing foodstuff with smoke. It is a still further object of the present invention to provide such system, which allows for a more controlled smoking process, particularly for controlling smoke presence, temperature and/or smell.

These and other problems are solved by the subject matter of the attached independent claims.

The above objects of the invention are achieved by a system for curing or flavouring foodstuff according to claim 1 and a method according to claim 8.

Preferred embodiments may be taken from the dependent claims. According to the present invention the system comprises a food container and a hose, wherein a first end of said hose is connected to the outlet opening and a second end of said hose is connected to the food container, and wherein the food container comprises a cooking vessel and a lid, and wherein the lid is sealing the cooking vessel in an essentially airtight manner, and wherein the food container, preferably the lid, comprises an adapter configured to be connected to the second end of the hose.

The above described problems are also advantageously solved in a further aspect by a household cooking appliance. Such household cooking appliance is a household cooking appliance of the system according to the present invention, and may be advantageously manufactured and supplied as a part of the system or as an individual part. The embodiments, features and advantageous described in connection with the household appliance shall be understood to be respective embodiments, features and advantageous of the system according to the present invention.

The household cooking appliance may particularly be an oven, preferably provided with a steam generator, e.g. a steam-cooking oven. Such household cooking appliance comprises a heatable cavity for storing foodstuff, which may be provided in a food container. The cavity of the appliance has an outlet opening for supplying the smoke generated by the smoking unit to the cavity of the appliance.

The outlet opening may be arranged in any of the cavity walls, comprising the sidewalls, back wall, upper wall and lower wall, and the frontal door. However, due to better handling and processing of the smoking process, as well as better handling and processing of other cooking or baking processes to be carried out in the household cooking appliance, it is preferred to arrange the outlet opening in a side wall of the cavity.
Such arrangement is particularly advantageous for the arrangement of a connection, e.g. smoke guiding elements, of the smoking unit and the outlet opening.

In a further advantageous embodiment of the inventive system, the household cooking appliance comprises a control unit configured to operate and/or control smoke supply to the outlet opening. For such purpose the system, particularly the control unit and/or the household cooking appliance may comprise controllable valves. The control unit of the household appliance may be configured to control said valves and/or the operation of the electric fan arranged for supplying the smoke generated by the smoker unit to the outlet opening.

Particularly, the control unit may be configured to operate cooking programs comprising smoking steps. For example, the duration and/or intensity of smoke supply to the foodstuff may be controlled by the control unit, and particularly by such programs. By way of example, the creation of smoke or aroma can be integrated into automatic programs, e.g. to produce a predetermined smoke aroma for a predetermined time period. For example, a program may operate the electric fan or valves 5 min before a cocking program finishes.

The above described problems are also advantageously solved in a further aspect by a method for flavouring or curing foodstuff according to claim 8. Said method according to the present invention comprises at least the following steps:
a) placing a food container having an adapter configured to be connectable to a hose into a cavity of a household cooking appliance comprising a smoker unit and an outlet opening ;
b) attaching a second end of the hose to the adapter;
c) attaching a first end of the hose to the outlet opening ;
d) providing a smoke source to the smoker unit ;
e) generating smoke from the smoke source; and
f) subjecting foodstuff to the smoke.

Such method may be particularly supported by the control unit of the household cooking appliance, and more particularly by a program stored in said control unit in the steps of e) generating smoke from the smoke source; and f) subjecting food stuff to the smoke.

In an advantageous embodiment of the inventive method, the method further comprises a step of activating an exhaust fan system of the household cooking appliance.

A person skilled in the art will immediately recognize that a household cooking appliance, particularly an oven, as known in the art is usually applied with an exhaust fan system, which can be advantageously be employed by the present invention.

For example, the exhaust fan system of the household cooking appliance can be activated before, during and/or after the smoking process to create a negative pressure inside the cavity. Such negative pressure may advantageously assist the functioning of the electric fan for supplying the smoke generated by the smoker unit to the outlet opening. Particularly, such negative pressure may additionally suck the smoke from the smoker unit to the outlet opening. Particularly, in embodiments according to which a filter is arranged in the system the additional negative pressure generated by the exhaust fan system may be advantageous in pressure equalization through the filter. Furthermore, the contact time of the smoke, flavour or aroma with the food can be controlled by activating the exhaust system. Particularly, the exhaust system may be advantageously used after the heating chamber is cold subsequently sucking in fresh air from the outside and/or capturing the residual smoke, flavour or aroma in the filter.

The system according to the present application advantageously allows smoking and/or curing of the foodstuff, particularly by providing a precise control of smoke amount, duration of smoking, temperature, relative humidity, and air and/or smoke speed into a household cooking appliance. This can be advantageously achieved with the system of the present application, and particularly in an embodiment according to which the household cooking appliance is an oven equipped with steam technology.

The control of relative humidity is advantageous for dry curing. Said dry curing is performed with defined humidity and temperature. The integration of a hygrometer into the system provides real time feedback to the control unit. A specific parameter can be created to supply and monitor humidity from the incorporated steam system. The dry curing is typically done at lower temperatures than the temperatures during smoke curing, since the temperature control for both heating and cooling is required for this process. If a cooling system is integrated, then cold smoking is possible. In particular, fish, cheese, bacon, etc. may be prepared by cold smoking. The cooling system is optional. The implementation of the smoking system may also include refrigeration devices or at least ovens with refrigeration capability. The above described problems are also advantageously solved in a further aspect by a smoker unit. Such smoker unit is a smoker unit of the system according to the present invention, and may be advantageously manufactured and supplied as a part of the system or as an individual part. The embodiments, features and advantageous described in connection with the smoker unit shall be understood to be respective embodiments, features and advantageous of the system according to the present invention.

The smoker unit is capable of generating smoke. Said smoke is generated in a heating chamber of the smoker unit. For this purpose a smoke source, for example wood, wood chips, a flavouring liquid, aromas or the like, can be provided to the heating chamber and being heated in the heating chamber to generate the smoke.

The smoker unit and the household cooking appliance are configured such that the smoker unit is mountable to said household appliance for supplying smoke to said outlet opening. For this purpose, further elements such as smoke guiding elements, e.g. a tube, pipeline, guiding or receiving element, insulation means, or the like can be provided. Particularly, if the outlet opening is arranged more distant from the smoker unit the smoke can be supplied to the outlet opening via a respectively arranged smoke guiding element, e.g. a hose or a pipeline. Such smoke-guiding element preferably is arranged and configured such that it connects the outlet opening and the smoker unit such that smoke generated by the smoker unit is supplied to the outlet opening. Thereby it is preferred that the electric fan is arranged and configured such that it is capable of sucking in air through smoker unit, particularly through the heating chamber, to enhance the burning or smouldering of the smoke source materials and transports the smoke, aroma or flavour to the outlet opening and thus to the food. The connection of the electric fan to the outlet opening, particularly a smoke guiding element, preferably is arranged behind a wall of the cavity. It is preferred that said connection can be made out of metal to withstand the high temperatures that can occur during a pyrolytic cleaning cycle. The outlet opening preferably is sealable to avoid smoke and odour transfer from the smoking, aroma or flavouring system, particularly the smoker unit, when the household cooking appliance is used for cooking or baking processes other than smoking, and/or if a food container is not connected to the outlet opening via a hose.

The term "smoke" as used herein, preferably refers to airborne solid and/or liquid particulates and gases emitted when a smoke source material undergoes combustion or pyrolysis, together with the quantity of air that is entrained or otherwise mixed into the mass. Such smoke source material may comprise any agent suitable to generate smoke by combustion or pyrolysis, which is useful as a flavouring agent and/or preservative of foodstuffs. In connection with the present invention, preferable smoke source materials comprise wood, wood chips, flavour liquids, dust, herbs, incense, aromas or the like.

Accordingly, when using the system of the present invention smoke is supplied to the foodstuff for curing, smoking, aroma or flavouring the foodstuff.

For this purpose, a smoke source material is put into the heating chamber of the smoker unit according to the present invention, supplied with heat from a heat source, and which then undergoes combustion or pyrolysis, thus generating the smoke. If the fan is operated, the smoke is sucked and supported to the outlet opening. Advantageously, the fan thereby generates an under-pressure in the heating chamber, supporting the combustion or pyrolysis reaction with fresh air and thus enhances the smouldering or burning of the smoke source material. Accordingly, the amount of smoke supplied to the outlet opening and the rate of pyrolysis or combustion can be advantageously controlled by the fan operation.

The smoker unit may be arranged at and/or connected to various positions of the household cooking appliance. Particularly preferred is an arrangement, which allows for an easy access and operation by the user.

In an advantageous embodiment of the inventive system, the smoker unit is arranged or arrangeable outside of the cavity, preferably outside of the cooking appliance. Such arrangement is advantageous, as the smoker unit is not subjected to the heat in the cavity during a cooking or baking process, particularly during a pyrolysis process.

In a preferred embodiment, the smoker unit is arranged at the front of the household cooking appliance. This allows an easy access and operation by the user. Particularly, the smoke source material can be charged or re-charged without opening the frontal door closing the cavity. The smoker unit may contain a tray or grid on which the smoke source material can be placed. Particularly such tray or grid may be arranged in or above the heating chamber. The tray or grid may comprise a central depression dimensioned to accept small amount of smoke source material capable of being pyrolyzed or smouldered to produce the necessary amount of smoke. The smoker unit, particularly the heating chamber, may comprise an opening at the upper side. The smoker unit, particularly the heating chamber, may be configured open or closable, e.g. by a lid, which allows a user to easily charge or re-charge the smoker unit with smoke source material.

The grid or tray may be detachably mounted to the smoker unit and/or the heating chamber, which advantageously facilitates cleaning and/or replacement. The heating chamber preferably is made out of a non-flammable material. In a preferred embodiment the smoker unit is tube-shaped, particularly pipe shaped. It is also preferred that the smoker unit is arranged such that in a stage in which the smoking process is carried out the smoker unit protrudes from the frontal side of the household cooking appliance. In an embodiment, the smoker unit is arranged retractable in the frontal side of the household appliance, in a respectively formed receiving, by a push/pull mechanism. This allows that the smoker unit can be pulled out for use, and if not in use be pushed into the receiving. Preferably, in a retractable stage the surface of the smoker unit and the surface of the household appliance form an even surface, which provides for an advantageous design and, moreover, prevents the smoker unit from being damaged. At the same time, such receiving provides for storage of the smoker unit, if not in use. In the pulled-out state the smoker unit may be charged with smoke source material by the user.

In a further advantageous embodiment of the inventive system, the smoker unit can be detachably mounted to the household cooking appliance. This particularly facilitates the cleaning and/or replacement of the smoker unit. Particularly, the smoker unit can be stored inside the household appliance, in respectively formed receiving or detached from the household cooking appliance, when it is not used.

In a further advantageous embodiment of the inventive system, the heating chamber comprises a heating element. Such heating element advantageously allows applying the heat to the smoke source material sufficient to generate smoke. Such heat element particularly may be an electrical heating element. More particularly, the heating element may advantageously be controlled by the control unit of the household cooking appliance. Alternatively, the smoke source material placed in the heating chamber can be heated by an external heat source, for example a flame provided by matches, a lighter or a cooking torch.

When the heating element is an electrical heater the temperature of the chamber can be measured and controlled to be able to release temperature specific smoke or aromas from the heated smoke source materials, e.g. wood, dust, herbs, incense, or the like.

In an alternative embodiment, the heating element may be configured comprising an ignition mechanism and, optionally, a fuel supply, e.g. a gas supply. This is particularly of advantage as the ignition can be controlled and programmed by the control unit. For example, the ignition mechanism may be formed as the ignition of a gas cigarette lighter or the electric ignition of a gas cooking hob or gas oven.

The smoker unit, particularly the heating chamber, may comprise a temperature control mechanism, for example, comprising a temperature sensor for detecting the temperature within the heating chamber and/or valves for regulating the air supply. Additionally, the electrical fan can be controlled to adjust the temperature within the heating chamber.

The household cooking appliance according to the system of the present invention preferably is an oven, more preferably an oven comprising a steam function, for example, a steam-cooking oven. The household cooking appliance may particularly comprise a steam generator for providing a steam function.

Such steam function advantageously provides a possibility to heat and generate separately the smoke according needs, particularly avoiding overheating and flame, providing a precise temperature control and allowing a refill of water or vapor to the smoke source material, e.g. wooden chips, also during the smoke process using the steam generator.

In a further advantageous embodiment of the inventive system, the smoker unit comprises a smell filter. Such smell filter advantageously avoids smell inside the kitchen during and after use of the smoker unit. The smell filter may be arranged and configured such that it is activated when the smoke process is activated or will be activated later during the process. Particularly, the smell filter may be configured and arranged such that it is activated and remains activated for a certain time after operating the smoker unit, i.e. in a time-controlled manner. Such activation and/or switching off of the smell filter may advantageously be controlled by the control unit of the household cooking appliance and/or a program stored therein, in dependence to the respective time period.

In a further advantageous embodiment of the inventive system, the smoker unit comprises a smoke detector.

Particularly, if a smell filter is comprised in the smoker unit the smell filter can be activated, remains activated until the smoke detector indicates smoke in cavity, i.e. in a smoke controlled manner. Such activation and/or switching off of the smell filter may advantageously be controlled by the control unit of the household cooking appliance and/or a program stored therein in dependence to the respective detection of the smoke detector.

Preferably, the smoke detector is arranged out of the cavity, since most smoke detectors are not heat resistant enough to withstand oven temperatures. For example, the smoke sensor can be situated in a cooling channel of the oven. Further, an optical smoke detector can be situated outside the cavity with a transparent bypass connected to the cavity inside to enable the sensor to measure the smoke inside the cavity. Preferably, the smell filter is situated between the cavity and the cooling fan or is arranged directly on the container lid.

A smoke detector in combination advantageously allows for a precise smoke regulation. The presence of smoke can be verified and the smoking process can be controlled more precisely than just through temperature control.

The system further comprises an electric fan arranged for supplying the smoke generated by the smoker unit to the outlet opening. Such fan is provided as a part of the system. Thereby the fan can be configured and arranged as a separate part or may also be advantageously configured as a part of the smoker unit or household cooking appliance thus forming an assembly part.

The fan is configured and arranged such that it is capable of generating an airflow, which is sucking the smoke generated in the smoking unit, particularly in the heating chamber, and supplying said smoke to the outlet opening. For this purpose, it is preferable to arrange the fan in or at a smoke guiding element.

In a further aspect the present invention provides a hose. The system according to the present invention comprises such hose. Such hose may be advantageously manufactured and supplied as a part of the system or as an individual part. The embodiments, features and advantageous described in connection with the hose shall be understood to be respective embodiments, features and advantageous of the system according to the present invention.

The hose is for supplying smoke from a smoker unit mounted to a household cooking appliance, into a food container. The hose comprises a first end and a second end, wherein the first end is connected to the smoke outlet opening of the household cooking appliance of the system according to the present invention. The second end of the hose is connected to an adapter of a food container.

By connecting the hose with its first end to the smoke outlet opening of the household cooking appliance and its second end of the hose to an adapter of the food container, the hose thereby preferably establishes an essentially airtight connection between the outlet opening and the food container. The hose thus serves to guide the smoke from the outlet opening into the food container, and prevents that smoke enters the cavity of the household cooking appliance. Preferably, at least one end of the hose, more preferably both ends of the hose, are provided with an adapter means for connecting the respective end of the hose with either the adapter of the food container or the outlet opening. The outlet opening and/or the food container may be provided with such adapter for connecting the respective end of the hose. Thereby the adapter connections and respective adapters at the first end of the hose and the smoke outlet opening, and the second end of the hose and of the food container can be formed same or different. Additionally, at least one end of the hose and/or the adapters of the food container and/or the outlet opening may comprise a valve for preventing unwanted smoke release.

Such hose is preferably made from a flexible material, which allows a more flexible connection of the food container with the outlet opening and thus a more flexible placement of the food container. Particularly, the food container may be placed on a baking tray or grid, while the grid is pulled out from the cavity, which allows for a more convenient handling and access of the food container.

The hose according to the present invention allows transporting the smoke, aroma or flavours from the outlet opening to and into a food container, which holds the foodstuff to be smoked inside the oven. Particularly the electric fan sucks in air through the heating chamber to enhance the burning or smouldering of the smoke source materials, and transports the smoke, aroma or flavour through the hose into the container. In the container, it comes in contact with the foodstuff and settles on the surface of it to infuse the food with its aroma or cures the foodstuff.

In a further aspect the present invention provides the food container. The system according to the present invention comprises such food container. Such food container may be advantageously manufactured and supplied as a part of the system or as an individual part. The embodiments, features and advantageous described in connection with the food container shall be understood to be respective embodiments, features and advantageous of the system according to the present invention.

Such food container comprises a cooking vessel and a lid. The food to be smoked can be placed in the vessel and the container may be closed by the lid. Thereby the lid is capable of sealing the cooking vessel in an essentially airtight manner. This advantageously prevents an unwanted release of smoke from the container. The food container, preferably the lid, comprises an adapter configured to be connectable to the second end of a hose. The hose is used to supply smoke from the outlet opening into the food container. For this purpose, the first end of said hose is configured to be attachable to the smoke outlet opening.

The food container advantageously allows placing foodstuff to be smoked or cured into it, and thereby provides an essentially airtight smoking chamber. Moreover, the use of such food container advantageously allows for an odour-free oven cavity. The food container additionally is relatively easy to clean, and preferably be manufactured from a material, which allows for cleaning in a dishwasher.

In a further advantageous embodiment of the inventive system, the food container comprises an opening for pressure equalization. Such opening for pressure equalization preferably is arranged in the lid of the food container.

In a further advantageous embodiment of the inventive system, the food container comprises a filter element, for example a carbon filter. Such filter element allows for minimizing the smoke, aroma or flavours, which exit the food container. The container may also comprise a gasket. The food container, i.e. the lid and/or the vessel, and, preferably its secondary parts, for example the filter or gasket, preferably are manufactured from a temperature-stable material to allow cooking of the foodstuff with standard household cooking appliance heating or baking procedures with the standard heating elements of the household cooking appliance.

All described embodiments of the invention have the advantage, that the system according to the present invention allows the user to smoke or cure foodstuff without the need for an additional smoking appliance. By contrast, the system is adaptable to existing household cooking appliances. Particularly, relatively small amounts of smoke source material can be used to create a sufficient amount of smoke to flavour or cure the foodstuff. Moreover, the present invention allows for controlling smoke amount, duration of smoke application, temperature, relative humidity, and airspeed in a household cooking appliance. Furthermore, when applying the food container odours are kept inside the food container and the household cooking appliance is kept smell-free. Moreover, the exhaust fan system present in usual household cooking appliances can be advantageously used in connection with the system of the present invention. Still further, the present invention advantageously allows that smoke, flavours or aromas can be added in cold or warm temperatures. With the present invention foodstuff can be flavoured, smoked and/or cured without heating or with heat by the standard heating system of the household cooking appliance. The smoker unit furthermore allows for an easy charging and re-charging of smoke source materials. Particularly, smoke, flavours or aromas can be administered more than one time. Moreover, different smoke source materials can be applied and combined in the smoker unit. The present invention also allows to advantageously using the control unit of the household cooking appliance, for example, for combination of smoke or aroma generation with a cooking program. The control system and/or the exhaust fan system of the appliance can advantageously be used to control contact time of smoke, flavour or aroma. The system furthermore avoids strong smell in the room where the appliance is operated. Advantageously, the arrangement and configuration of the system reduces the risk of fire due to temperature control and arrangement and configuration of the smoker unit.

The present invention will be described in further detail with reference to the drawings from which further features, embodiments and advantages may be taken, and in which:
- FIG 1: illustrates a schematic frontal view of a household cooking appliance showing a first inventive embodiment; and
- FIG 2: illustrates a schematic sectional side view of the household cooking appliance according to the first inventive embodiment.

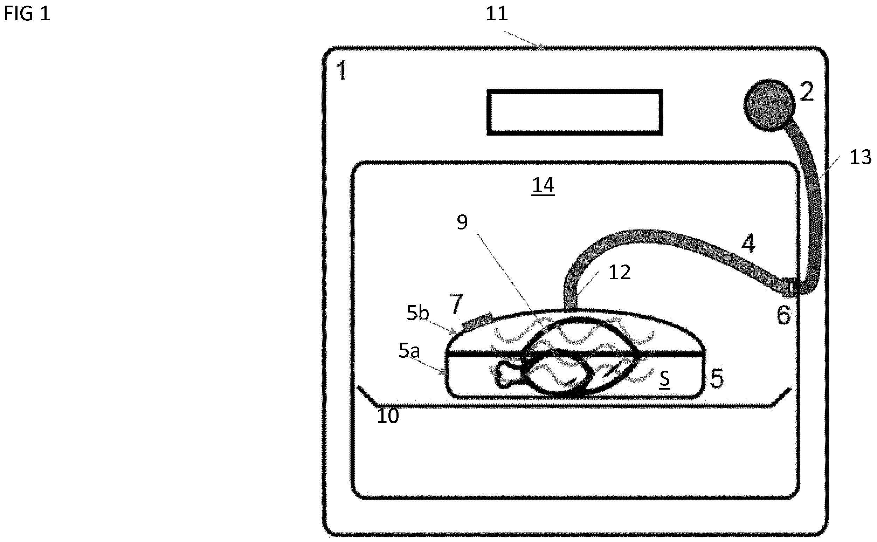

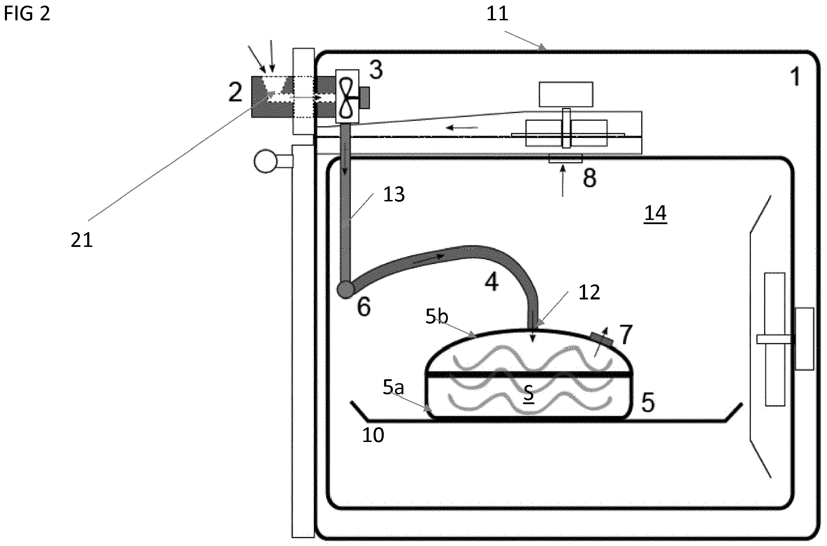

Figs 1 and 2 show a system for curing or flavouring foodstuff comprising a household appliance 1. The household cooking appliance 1 may in general be any household cooking appliance known in the art, which may be provided with the system according to the present invention. In the shown embodiment, the household cooking appliance is described by way of example in the form of an oven 1. Such household cooking appliance usually comprises an outer housing 11, comprising a cavity 14. The cavity 14 is formed by a rear wall, a bottom wall, an upper wall and two sidewalls, and comprises a central opening, which is closable by a frontal door. As apparent from Figs 1 and 2 an outlet opening 6 is arranged in a sidewall of the cavity 1. The cavity 14 is configured to store foodstuff 9, particularly comprised in a food container 5 placed on a grid or baking tray 10. The foodstuff 9 is shown in Fig 1 only. The oven 1 usually comprises at least one heating system for heating the cavity 14, for example an electrical heating or gas heating system, and/or optionally a steam system. Such household cooking appliance furthermore usually comprises a control unit for controlling various functions of the appliance and a display and/or user interface to allow for displaying and/or input parameters of the processes to a used. The control unit of the oven 1 may also be configured to operate and/or control smoke supply to the outlet opening 6. Particularly, a household cooking appliance as known in the art is usually applied with an exhaust fan system 8, which can be advantageously be employed by the present invention, in that the exhaust fan system 8 is used to assist the smoking process, particularly be generating a negative pressure in the cavity 14.

The system further comprises a smoker unit 2 arranged at the frontal side of the oven 1. Here the smoker unit 2 is shown in a configuration where the smoker unit 2 partially protrudes from the frontal side of the oven 1. The smoker unit 2 is capable of generating smoke S, whereby the arrows in Fig. 2 depict the flow of smoke S.

As immediately apparent from Figs 1 and 2, the smoker unit 2 is arranged outside of the cavity 14. Particularly, the smoker unit 2 is arranged in a receiving formed in the frontal side of the outer housing of the oven 1 and can be detachably mounted to said receiving. The smoker unit 2 further comprises a heating chamber 21 and is configured and arranged mountable to the oven 1 for supplying smoke to said outlet opening 6. For this purpose the smoker unit 2 is connected to the outlet opening 6 by a smoke guiding element 13, here a tube. The system further comprises an electric fan 3, which is arranged at the rear side of the smoker unit 2 within the outer housing of the oven 1.

The heating chamber 21 of the smoker unit 2 may comprise a heating element for heating smoke source material provide to the smoker unit 2. Additionally or alternatively, the smoke source material can be heated by an external heat source, e.g. a flame. The smoker unit 2 may additionally comprise a smell filter.

In a smoking process, for example according to the method of the present invention, the fan 3 sucks the smoke S into the smoke guiding element 13 and thus supplies the smoke S generated by the smoker unit 2 to the outlet opening 6.

The food container 5 placed in the cavity 14 comprises a cooking vessel 5a and a lid 5b. The lid 5b is capable of sealing the cooking vessel 5a in an essentially airtight manner. The food container 5 additionally comprises a filter element 7, for example a carbon filter. The food container 5, in the shown embodiment the lid 5b, comprises an adapter 12 configured to be connectable to the second end of a hose 4.

The first end of said hose 4 is configured to be attachable to a smoke outlet opening 6, provided in a cavity wall of the oven 1, and its second end is configured to be attachable to the food container 5, particularly to the adapter 12. Accordingly, the hose 4 can be advantageously arranged such that its first end is connected to the outlet opening 6, and its second end is connected to the adapter 12 of the food container 5. Accordingly, smoke S is guided from the outlet opening 6 through the hose 4 into the container 5, thus allowing curing or smoking the foodstuff 9.

The food container 5 further comprises an opening for pressure equalization, not shown in the figure.

### List of reference numerals

- 1: household cooking appliance
- 2: smoker unit
- 21: heating chamber
- 3: electric fan
- 4: hose
- 5: food container
- 5a: vessel
- 5b: lid
- 6: outlet opening
- 7: filter element
- 8: exhaust fan system
- 9: foodstuff
- 10: grid or baking tray
- 11: outer housing
- 12: adapter
- 13: smoke guiding element
- 14: cavity
- S: smoke

## Claims

1. A system for curing or flavouring foodstuff comprising
- a smoker unit (2) capable of generating smoke (S), wherein the smoker unit (2) comprises a heating chamber (21); and
- a household appliance (1), particularly an oven, comprising a cavity (14) for storing foodstuff and/or a food container (5), the cavity (14) having an outlet opening (6) for supplying the smoke (S) to the cavity (14), wherein the smoker unit (2) is mounted to said household appliance (1) for supplying smoke (S) to said outlet opening (6); and wherein the system further comprises an electric fan (3) arranged for supplying the smoke (S) generated by the smoker unit (2) to the outlet opening (6),
**characterised in that**
the system comprises a food container (5) and a hose (4), wherein a first end of said hose (4) is connected to the outlet opening (6) and a second end of said hose (4) is connected to the food container (5), and wherein the food container (5) comprises a cooking vessel and a lid, and wherein the lid is sealing the cooking vessel in an essentially airtight manner, and wherein the food container (5), preferably the lid, comprises an adapter configured to be connected to the second end of the hose (4).

2. The system according to claim 1, wherein the smoker unit (2) is arranged outside of the cavity (14).

3. The system according to any one of claims 1 or 2, wherein the smoker unit (2) is detachably mounted to the household cooking appliance (1).

4. The system according to any one of claims 1 to 3, wherein the heating chamber (21) comprises a heating element.

5. The system according to any one of claims 1 to 4, wherein the smoker unit (2) comprises a smell filter.

6. The system according to any one of claims 1 to 5, wherein the food container (5) comprises an opening for pressure equalization.

7. The system according to any one of claims 1 to 6, wherein the household cooking appliance (1) comprises a control unit configured to operate and/or control smoke supply to the outlet opening (6).

8. A method for flavouring or curing foodstuff, comprising at least the following steps:
a) placing a food container (5) having an adapter configured to be connectable to a hose (4) into a cavity (14) of a household cooking appliance (1) comprising a smoker unit (2) and an outlet opening (6);
b) attaching a second end of the hose (4) to the adapter;
c) attaching a first end of the hose (4) to the outlet opening (6) ;
d) providing a smoke source to the smoker unit (2);
e) generating smoke (S) from the smoke source; and
f) subjecting foodstuff to the smoke (S).

9. The method according to claim 8 further comprising a step of activating an exhaust fan system (8) of the household cooking appliance (1).

## Patentansprüche

1. System zum Räuchern oder Aromatisieren von Lebensmitteln, umfassend
- eine Räuchereinheit (2), die Rauch (S) erzeugen kann, wobei die Räuchereinheit (2) eine Heizkammer (21) umfasst; und
- ein Haushaltsgerät (1), insbesondere ein Ofen, umfassend einen Hohlraum (14) zum Aufbewahren von Lebensmitteln und/oder eines Lebensmittelbehälters (5), wobei der Hohlraum (14) eine Auslassöffnung (6) zum Zuführen des Rauchs (S) zum Hohlraum (14) aufweist, wobei die Räuchereinheit (2) am Haushaltsgerät (1) zum Zuführen von Rauch (S) zur Auslassöffnung (6) angebracht ist; und wobei das System ferner ein elektrisches Gebläse (3) umfasst, das zum Zuführen des von der Räuchereinheit (2) erzeugten Rauchs (S) zur Auslassöffnung (6) angeordnet ist,
**dadurch gekennzeichnet, dass**
das System einen Lebensmittelbehälter (5) und einen Schlauch (4) umfasst, wobei ein erstes Ende des Schlauchs (4) mit der Auslassöffnung (6) verbunden ist und ein zweites Ende des Schlauchs (4) mit dem Lebensmittelbehälter (5) verbunden ist, und wobei der Lebensmittelbehälter (5) ein Kochgefäß und einen Deckel umfasst, und wobei der Deckel das Kochgefäß auf eine im Wesentlichen luftdichte Weise abdichtet, und wobei der Lebensmittelbehälter (5), vorzugsweise der Deckel, einen Adapter umfasst, der zur Verbindung mit dem zweiten Ende des Schlauchs (4) ausgelegt ist.

2. System nach Anspruch 1, wobei die Räuchereinheit (2) außerhalb des Hohlraums (14) angeordnet ist.

3. System nach einem der Ansprüche 1 oder 2, wobei die Räuchereinheit (2) lösbar am Haushaltskochgerät (1) angebracht ist.

4. System nach einem der Ansprüche 1 bis 3, wobei die Heizkammer (21) ein Heizelement umfasst.

5. System nach einem der Ansprüche 1 bis 4, wobei die Räuchereinheit (2) einen Geruchsfilter umfasst.

6. System nach einem der Ansprüche 1 bis 5, wobei der Lebensmittelbehälter (5) eine Öffnung für den Druckausgleich umfasst.

7. System nach einem der Ansprüche 1 bis 6, wobei das Haushaltskochgerät (1) eine Steuereinheit umfasst, die zum Bedienen und/oder Steuern der Rauchzufuhr zur Auslassöffnung (6) ausgelegt ist.

8. Verfahren zum Aromatisieren oder Räuchern von Lebensmitteln, umfassend zumindest die folgenden Schritte:
a) Platzieren eines Lebensmittelbehälters (5) mit einem Adapter, der zur Verbindung mit einem Schlauch (4) ausgelegt ist, in einem Hohlraum (14) eines Haushaltskochgeräts (1), der eine Räuchereinheit (2) und eine Auslassöffnung (6) umfasst;
b) Befestigen eines zweiten Endes des Schlauchs (4) am Adapter;
c) Befestigen eines ersten Endes des Schlauchs (4) an der Auslassöffnung (6);
d) Bereitstellen einer Rauchquelle für die Räuchereinheit (2);
e) Erzeugen von Rauch (S) von der Rauchquelle; und
f) Aussetzen des Lebensmittels gegenüber dem Rauch (S) .

9. Verfahren nach Anspruch 8, ferner umfassend einen Schritt des Aktivierens eines Abluftventilatorsystems (8) des Haushaltskochgeräts (1) .

## Revendications

1. Système permettant de fumer ou d'aromatiser un aliment comprenant
- une unité de fumoir (2) susceptible de produire de la fumée (S), l'unité de fumoir (2) comprenant une chambre de chauffage (21) ; et
- un appareil électroménager (1), en particulier un four, comprenant une cavité (14) pour stocker l'aliment et/ou un récipient à nourriture (5), la cavité (14) possédant une ouverture d'évacuation (6) pour introduire la fumée (S) dans la cavité (14), dans lequel l'unité de fumoir (2) est montée sur ledit appareil électroménager (1) pour introduire la fumée (S) dans ladite ouverture d'évacuation (6) ; et dans lequel le système comporte en outre un ventilateur électrique (3) conçu pour introduire la fumée (S) produite par l'unité de fumoir (2) dans ladite ouverture d'évacuation (6),
**caractérisé en ce que**
le système comprend un récipient à nourriture (5) et un tuyau (4), dans lequel une première extrémité dudit tuyau (4) est raccordée à l'ouverture d'évacuation (6) et une seconde extrémité dudit tuyau (4) est raccordée au récipient à nourriture (5), et dans lequel le récipient à nourriture (5) comprend un récipient de cuisson et un couvercle, et dans lequel le couvercle ferme hermétiquement le récipient de cuisson d'une manière essentiellement étanche à l'air, et dans lequel le récipient à nourriture (5), de préférence le couvercle, comprend un adaptateur conçu pour être raccordé à la seconde extrémité du tuyau (4).

2. Système selon la revendication 1, dans lequel l'unité de fumoir (2) est agencée à l'extérieur de la cavité (14).

3. Système selon l'une quelconque des revendications 1 ou 2, dans lequel l'unité de fumoir (2) est montée amovible sur ledit appareil électroménager de cuisson (1).

4. Système selon l'une quelconque des revendications 1 à 3, dans lequel la chambre de chauffage (21) comprend un élément chauffant.

5. Système selon l'une quelconque des revendications 1 à 4, dans lequel l'unité de fumoir (2) comprend un filtre à odeurs.

6. Système selon l'une quelconque des revendications 1 à 5, dans lequel le récipient à nourriture (5) comprend une ouverture pour l'égalisation de la pression.

7. Système selon l'une quelconque des revendications 1 à 6, dans lequel l'appareil électroménager de cuisson (1) comprend une unité de commande conçue pour faire fonctionner et/ou commander l'alimentation en fumée vers l'ouverture d'évacuation (6).

8. Procédé permettant d'aromatiser ou de fumer un aliment, comprenant au moins les étapes suivantes :
a) placer un récipient à nourriture (5) possédant un adaptateur conçu pour pouvoir être raccordé à un tuyau (4) dans une cavité (14) d'un appareil électroménager de cuisson (1) comprenant une unité de fumoir (2) et une ouverture d'évacuation (6) ;
b) fixer une seconde extrémité du tuyau (4) à l'adaptateur ;
c) fixer une première extrémité du tuyau (4) à l'ouverture d'évacuation (6) ;
d) fournir une source de fumée à l'unité de fumoir (2) ;
e) produire de la fumée (S) par la source de fumée ; et
f) soumettre l'aliment à la fumée (S).

9. Procédé selon la revendication 8 comprenant en outre une étape consistant à activer un système de ventilation d'évacuation (8) de l'appareil électroménager de cuisson (1).
